# EUROPEAN PATENT SPECIFICATION

(11) **EP 3 468 407 B1**
(45) Date of publication and mention of the grant of the patent: **11.10.2023**
(21) Application number: 17728554.1
(22) Date of filing: 08.06.2017
(51) Int. Cl.: A45D 19/00

(54) **HAIR COLOURING TOOL**
HAARFÄRBEWERKZEUG
OUTIL DE COLORATION DES CHEVEUX

(30) Priority: 10.06.2016 GB 201610154
(43) Date of publication of application: 17.04.2019
(73) Proprietor: Seminara, Angelo, London N6 5DR (GB)
(72) Inventor: Seminara, Angelo, London N6 5DR (GB)
(74) Representative: Tomkins & Co
(86) International application number: PCT/EP2017/063945
(87) International publication number: WO 2017/211942

(56) References cited:
- EP-A1- 0 615 709
- EP-A1- 1 915 920
- WO-A1-2013/098136
- DE-A1- 10 334 482
- DE-U1- 20 104 669
- GB-A- 2 073 672
- KR-A- 20020 007 797
- US-A- 3 599 647
- US-A- 4 398 549
- US-A1- 2002 148 370
- US-A1- 2009 223 060
- US-A1- 2013 313 387

## Description

### Field of the Invention

The present invention relates to a hair colouring tool which can be used for creating coloured patterns or designs in the hair in an extremely accurate and efficient way. The pattern or design is achieved by dying and bleaching so that the patterned areas are either darker or lighter than the natural hair colour.

### Background to the Invention

Numerous techniques are available for the colouring of hair. In order to achieve control of the colouring and bleaching process, techniques have been developed for isolating the hair to be treated from the rest of the head of hair. One of these is the use of a cap, similar to a bathing cap which fits closely over the head. The cap has a plurality of tiny holes through which a hairdresser can pull small strands of hair using a crochet hook or the like. The strands of hair which have been separated from the remainder of the head of hair can then be bleached or dyed.

Foiling is a high maintenance and the most traditional way of colouring the hair where selected strands of hair are placed on sheets of foil or plastics and the colour is painted on. The free end of the sheet is then folded or rolled towards the head to trap the isolated strand of hair within the foil. Since typically it is desired to treat a number of strands of hair in this way, it becomes difficult to hold the foil in place as the dye or bleach is being applied to other strands of hair and indeed during the waiting time while the bleach or dye is left on the hair to bring about the dying effect. It is an ideal technique for clients that want their hair highlighted or coloured from root to ends.

Other techniques are available which give a more natural, sun kissed look to the hair. Ombré is a technique which involves going darker at the root and gradually getting lighter at the ends of the hair. The advantage of ombré is that it can work for any hair type or colour. If the hair is highlighted already, it is possible to just paint on a 'fake' root and make it look like the colour has grown out for a few months. Sombré is a more subtle version of ombré. The colour transition is also much more gradual so there are no lines of demarcation, which means less touch-ups, making it a lower maintenance, less expensive alternative to ombre.

Another method involves the use of liquid-impermeable or liquid-resistant sheets which incorporate a layer of adhesive. Typically the process of highlighting, lowlighting or streaking hair involves separating a portion of the hair which is to be treated, from the remaining hair on the head, sticking one side of a liquid-impermeable sheet or strip to the portion of hair separated at the roots of the hair, spreading a bleach, tint or a dye over the separated strand of hair and then folding the other end of the sheet over the treated hair to form an envelope, which separates the treated hair from the remainder of the hair on the head. The sheets are typically impermeable to liquid and may be made of aluminium foil, or a plastics material. They can be formed with a fold approximately along the length of the strip so that the two ends of the sheet can be folded together to trap a strand of hair between them. Often there is a strip of adhesive at one edge of the sheet which sticks to the hair to hold the strip on the hair, and which also sticks to the other half of the sheet when it is folded over. There is often a removable cover to protect the adhesive strip prior to use. By separating a strand of hair, placing it on the sheet, applying the bleach, tint or dye and then folding over the cover, the strand of hair which is treated is separated from the hair so that when the bleach, tint or dye is ultimately removed only a portion of the hair has a colour change, thus creating a highlighted, lowlighted or streaked effect in the hair. One of the most basic methods of bleaching or colouring hair to achieve a highlighted, lowlighted or streaked effect or to achieve any type of hair colouring, is for the bleach, tint or dye to simply be painted directly onto sections of the head of hair, this method is sometimes known as balayage. Balayage is a French word for sweep, so essentially Balayage is a freehand painting in which highlights are painted on areas of the hair in a sweeping motion, which creates a graduated natural-looking effect. This means that highlights will be in chunkier sections, making it seem like the sun naturally lightened the hair. Because no foils or meche are used to apply product, sections are less saturated than typical highlights and regrowth lines are less noticeable. It is great for clients who want a natural look with some contrast in the hair. However this method typically only allows the upper most strands of hair to be coloured. Also typically the liquid dye or bleach can penetrate the entire head of hair reaching the underlying strands resulting in much larger blocks of colour, which is undesirable.

Flamboyage is another hair colouring technique in which the meche is applied to the hair and whereby the hair sticks to the adhesive part of the meche. With a lifting action a random part of the section of hair sticks to the meche, or the meche is used like a normal foil but hair is fixed by adhesive to the meche, so a much more accurate colouring effect is achieved which results in the hair ends being lightened a little more. This process incorporates elements of both balayage and ombré techniques to give the hair more depth and a natural-yet-polished result. It utilises clear meche strips instead of foils. A colourist sticks the adhesive side of each strip to a layer of hair and then lifts it up. A random selection of hair stays in place on the meche that is then painted balayage-style. It creates a natural, mixed-in look.

A still further colouring effect for the hair is the use of stencils to create a pattern or design on the hair. A variety of stencils are available in which holes or slits are cut in a layer of plastics material or metal to create a particular design. The hairdresser then selects a layer of hair and isolates it from the rest of the hair on the head. The stencil is placed over this layer of hair and a colouring dye or bleach is painted on top of the stencil. The colour penetrates to the layer of hair in the region of the holes or slits to create a pattern of colour on the hair. The technique is the advantage of producing very unique and specialised patterns in the hair which are very dramatic. However the technique is difficult to execute since it is necessary to hold the stencil firmly against the layer of hair as the colour or bleach is being applied or otherwise there is a smudging effect which results in a bleeding of colour around the edges of the pattern given a blurred look to the design. It may be necessary for two people to apply the technique, one holding the stencil firmly in place and the other applying the colouring agents but this itself has drawbacks since one person will inevitably get in the way of the other.

The document EP1915920 discloses a kit according to the preamble of claim 1. The document DE20104669 discloses a kit with a stencil that is attracted to a magnetic planar device.

### Object of the Invention

It is an object of the invention to provide an improved device for applying patterns or designs to the hair which avoids smudging or blurring the outline of the design or pattern. A further object is to provide a tool or device which allows crisp, sharp outlines to the patterns applied to the hair. A still further object is to remove the necessity for two people to be involved in applying the pattern to the hair and to enable one person to achieve a good result. A still further object is to reduce the time and effort involved in in creating the patterns and designs on the hair. It is also an object of the invention to provide a simple, economical and effective tool and method for achieving patterns or designs in the hair.

### Summary of the Invention

According to the present invention there is provided a kit of parts comprising a device for producing patterned effects in the hair together with at least one stencil, the device comprising a substantially planar element having means to engage the at least one stencil, the planar element being provided with at least one indentation or at least one protrusion, the stencil being engageable with the planar element of the device, the stencil having at least one protrusion provided on the edge of the stencil or at least one indentation provided on the edge of the stencil, either the protrusion of the stencil being engageable with the indentation of the planar element, or the indentation of the stencil being engageable with the protrusion of the planar element,
characterized in that the planar element also comprises a magnetic means which is adapted to attract the stencil and hold it firmly in contact with the planar element, and the stencil is made of a material which is attracted by the magnetic means.

The planar element may be made of a magnetised material such that the planar element is the magnetic means. Alternatively the magnetic means is a magnet which is located inside the planar element. In a still further embodiment of the magnetic means may be a magnet which is located on the underside of the planar element.

Suitably the means to engage the stencil is a rim formed on the planar element along at least two of its sides, the rim defining a channel into which a stencil can be placed.

The device is either provided with an indentation into which a protrusion provided on the edge of a stencil can fit, or with a protrusion which is engageable with an indentation provided on the edge of the stencil.

The engagement of the protrusion into the indentation serves to hold the stencil in place. The protrusions and indentations allow the hairdresser to line up the stencil accurately so the colour pattern is not distorted along the hair. Suitably at least two indentations are provided on the device which are engageable with at least two protrusions on the stencil. Preferably the indentations are provided in pairs along the length of the device, each of the pair of indentations being provided equidistantly along the length of the device so that they oppose each other. Similarly the protrusions are provided equidistantly along the edge of the stencil so that they also oppose each other in pairs.

In certain embodiments the protrusions or indentations are provided on the rim of the device.

In an alternative embodiment the rim may be provided with the protrusions and the stencil may be provided with the indentations. These may also be arranged in opposed pairs and one pair of protrusions and indentations may be bigger than the rest. Preferably the planar element is oblong in shape, having two long sides and two short sides, and one of the short sides of the oblong is curved along its edge. In use this curved edge will sit comfortably against the head of the person whose hair is being coloured.

Preferably the short side of the device which is not curved is provided with an indentation which is roughly in the shape of a finger or thumb. This indentation allows the hair colourist to remove the stencil from the device.

Preferably the underside of the device i.e. the side of the device which does not abut the stencil is provided with a handle which projects out of the plane of the device and which can be used by the hair colourist to firmly grip the device. Suitably the handle is formed in an hour-glass shape to accommodate both left handed and right handed people. In an hour-glass shaped handle the thicker part of the handle is in the middle and this tapers at either end. The handle may be shaped to fit large and small hands. As will be appreciated by the skilled person, other shapes of handle would also be suitable. Alternatively, the handle may be hinged so that it closes against the planar element when the device is not in use. Preferably the handle is provided with a means to improve grip. A plurality of textured dots may be provided on the handle to improve grip. Alternatively the handle may be provided with ridges or grooves which make the handle easier to grip.

Preferably the planar element and/or the handle are provided with thickened areas to provide rigidity of the tool and at the same time ensure that the device was as light as possible.

Preferably the protrusions are provided in pairs, each of the pair being provided equidistantly along the length of the stencil so that they oppose each other.

Preferably the end of the stencil which would abut the head in use, is provided with a pair of projections which oppose each other across the width of the stencil, the projections being larger than the protrusions on the stencil. When a stencil is placed in the device these projections are seated outside the means to engage the stencil. In other words these projections are located outside the device in use. This feature aids location of the stencil in the device and also removal of the stencil from the device.

The stencil may be made of a material which is attracted by a magnet and it may further be coated with a material which is impermeable to hair dye or bleach in order to avoid staining the stencil. Suitable materials would be dye or bleach impermeable plastics. The stencils may be formed with any of a variety patterns, so for example the stencil could be for a series of hearts, diamonds, stars or the like, or it could be formed with a series of slits or slots in wave patterns or to give a leopard skin effect. The possibilities are endless.

### Brief Description of the Drawings

Figure 1 shows a first embodiment of a device for creating coloured patterns or designs in the hair in accordance with the present invention;
Figure 2 shows an embodiment of a stencil for use with the device of Figure 1;

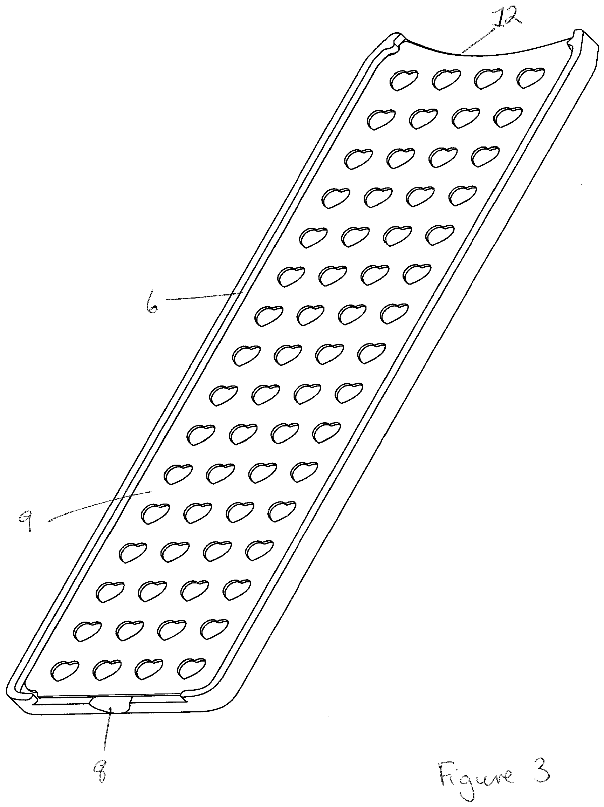

Figure 3 shows an embodiment of the device with the stencil in place;
Figure 4 shows an alternative embodiment of a device in accordance with the present invention with a means for accurately locating the stencil within the device;
Figure 5 shows an embodiment of a stencil for use with the device of Figure 4;

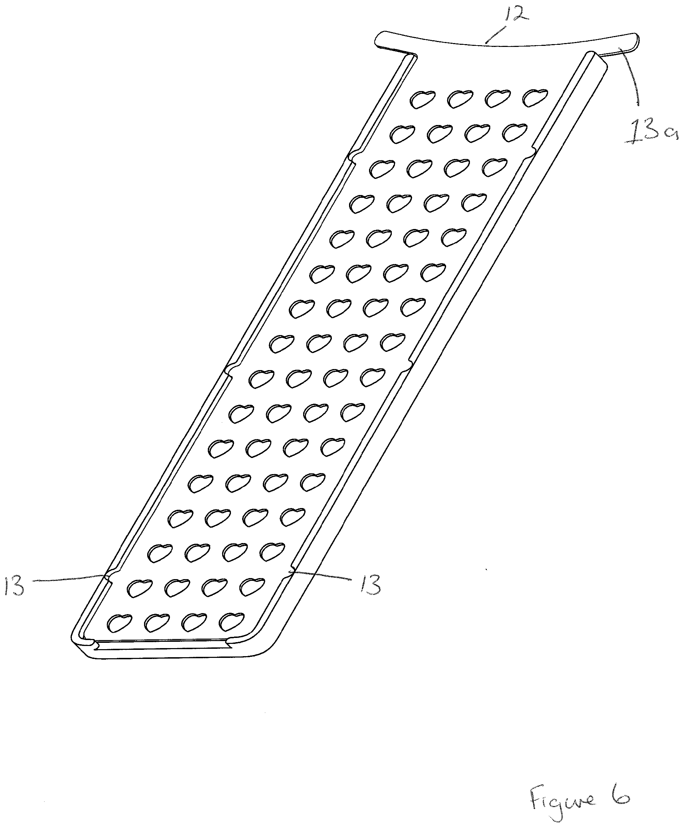

Figure 6 shows an embodiment of the device of Figure 4 with the stencil in place;
Figure 7 shows the underside of the device with a first embodiment of a handle;
Figure 8 shows the underside of the device with a second embodiment of a handle;
Figure 9 depicts the process of using the device of the invention to produce a coloured pattern on the hair.

### Detailed Description of the Drawings

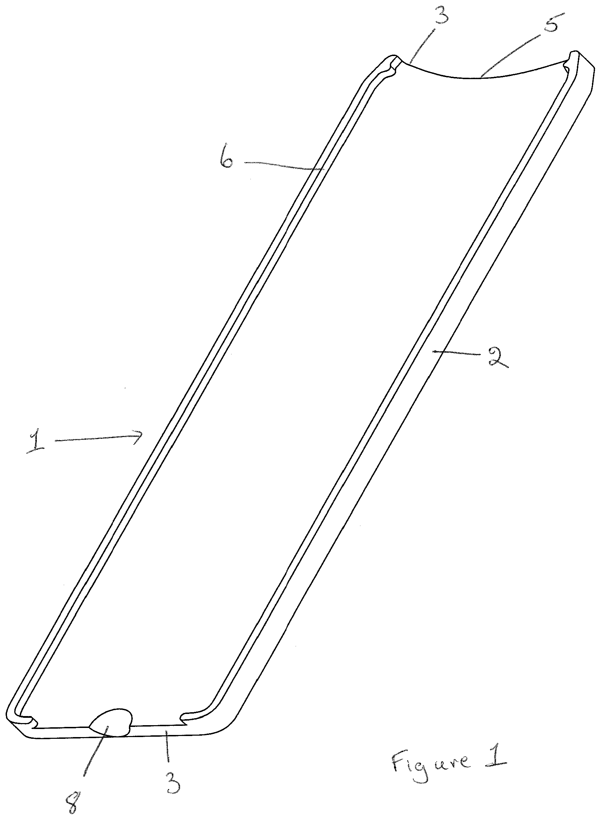

One embodiment of the present invention is shown in Figure 1. The device comprises a planar element 1 which is oblong in shape, they oblong having two long sides 2 and two short sides 3. One of the short sides 3 is formed with a curved edge 5 which generally conforms to the curvature of the human head. This means that in use this edge of the device can be placed comfortably against the head of the person whose hair is to be coloured.

The planar element 1 is formed with a rim 6 which projects above the plane of the planar element 1 on each of the long sides 2. The rim 6 is adapted to retain a stencil which may be placed on the planar element 1.

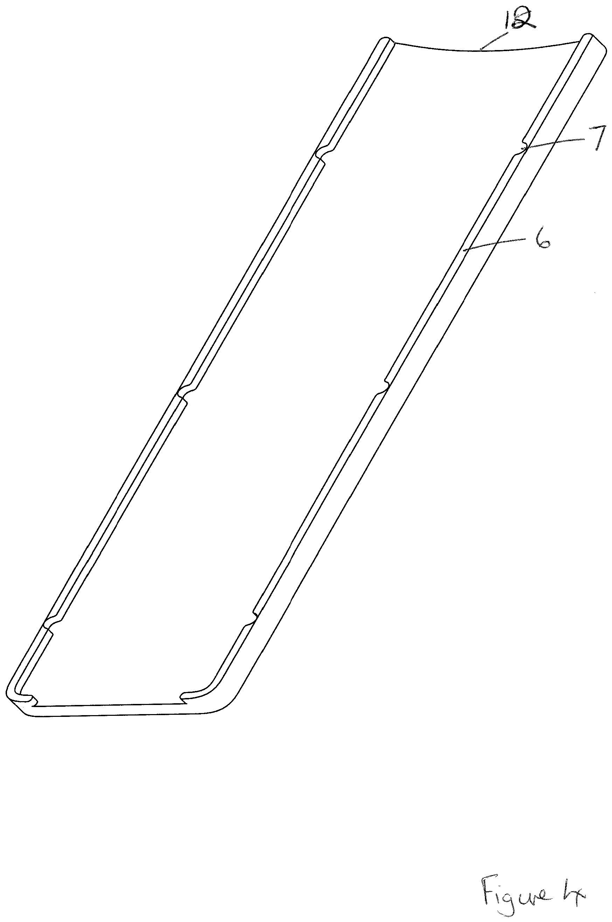

Figure 4 shows an alternative embodiment of the device in which rim 6 is also provided with pairs of indentations 7 which are parallel to each other so that they oppose each other. It would however be possible to provide alternative embodiments of the device in which these indentations 7 are positioned in different numbers and at different locations along the rim 6.

The short side 3 of the device which is not curved is provided with an indentation 8 which is roughly or generally in the shape of a finger or thumb, as shown in Figure 1. This indentation 8 allows the hair colourist to easily remove the stencil from the device.

This can be achieved by sliding a finger or thumb into the indentation which is then between the stencil and the device so that the hair colourist can then flick the stencil out with a finger or thumb.

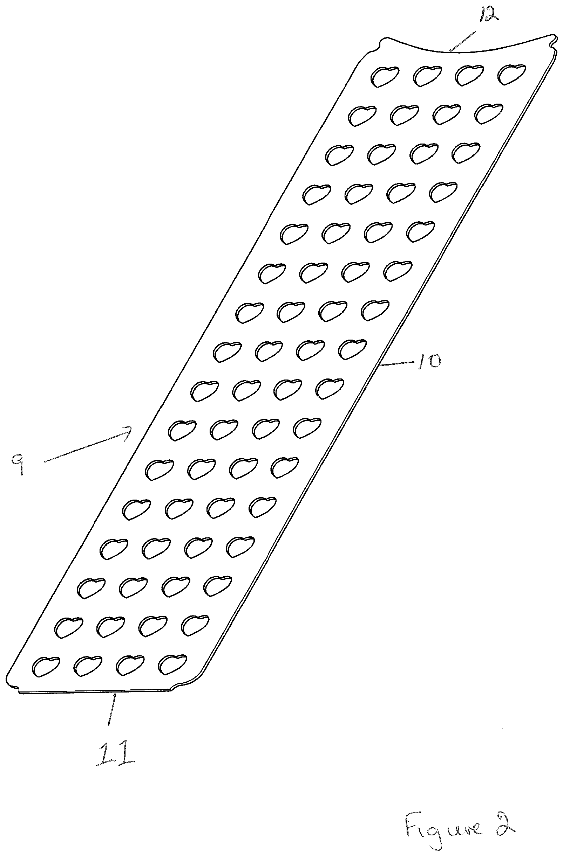

Figure 2 shows a stencil 9 for use with the device of figure 1. The stencil 9 is oblong with two long and two short sides 10 and 11 respectively. The stencil 9 is adapted to fit within the rim 6 on top of the planar element 1. The stencil is provided with a curved short edge 12, the curvature being approximately the same as the curvature provided on the short edge 5 of the device.

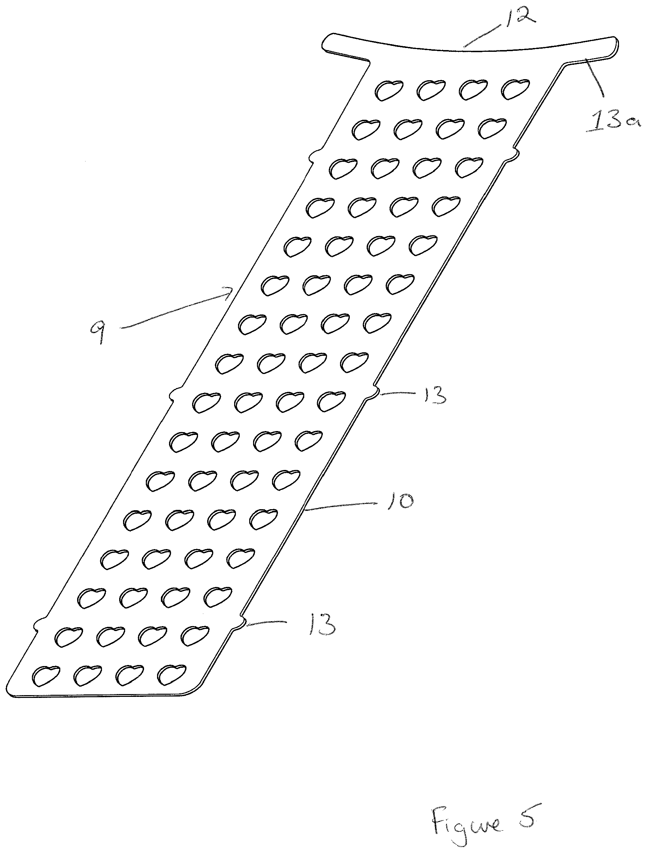

In the embodiment of the stencil shown in Figure 5 the stencil 9 is also provided with pairs of protrusions 13 on the long sides 10, which oppose each other. In the embodiment shown the stencil is also provided with a pair of projections 13a located close to the curved edge 12 of the stencil, and which are parallel to each other across the width of the stencil, these projections being larger than the protrusions 13. The protrusions 13 are adapted to be engageable with the indentations 7 which are provided on the device. When a stencil is placed in the device these projections 13a are seated outside the device in use. This feature aids location of the stencil in the device and also removal of the stencil from the device.

The stencil 9 is thus adapted to seat with in the device on top of the planar element 1, and between the longitudinal rims 6. The indentations 7 and the protrusions 13 cooperate to hold the stencil 9 in place on the device without it slipping. The planar element 1 is provided internally with a magnet (not shown). The stencil 9 is made of a material which is attracted to the magnet so that the magnet holds the stencil firmly in place in the device.

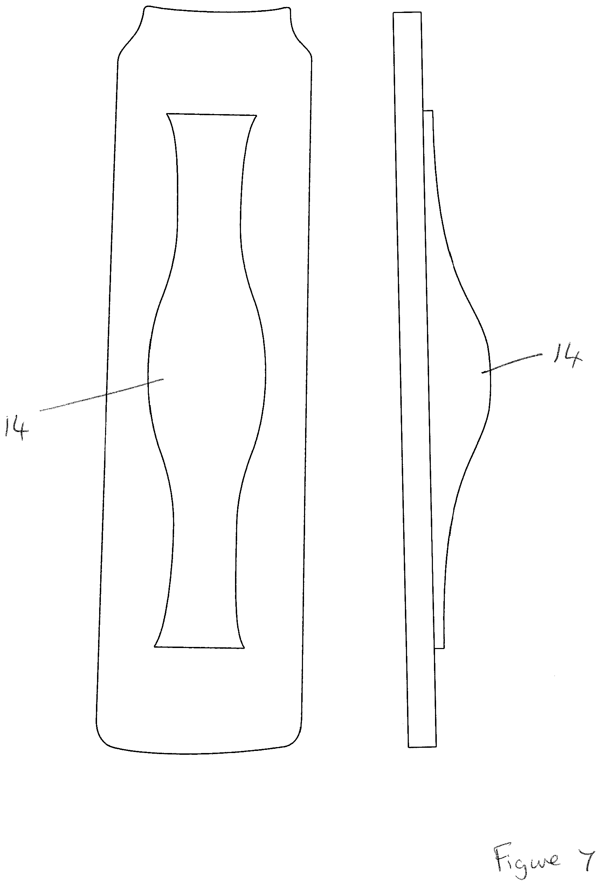

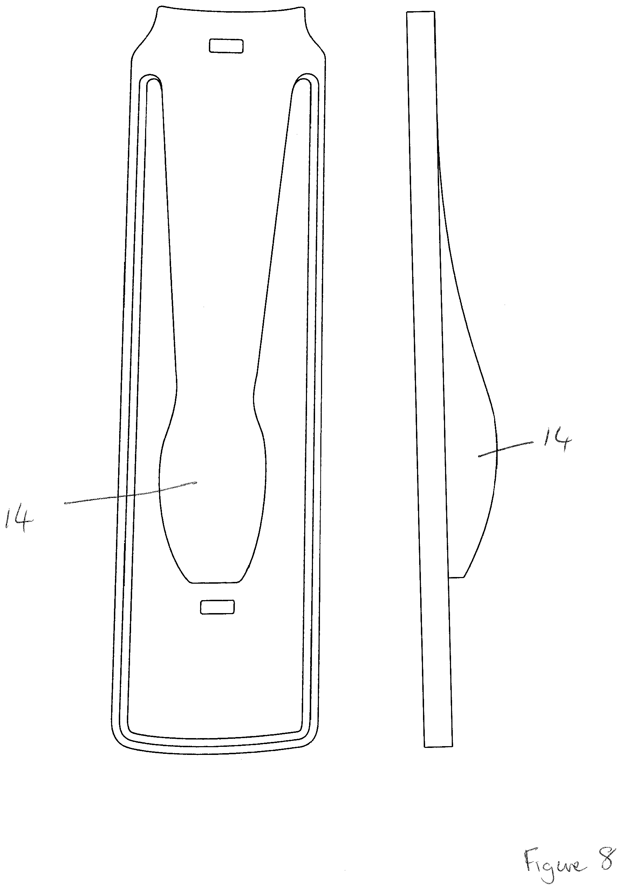

As shown in Figure 7 the device 1 is provided with an integral handle 14 which protrudes from the underside of the device and which projects out of the plane of the device and which can be used by the hair colourist to firmly grip the device. In this embodiment the handle 14 is of an hour-glass shape. Alternative shapes are possible, such as that shown in Figure 8.

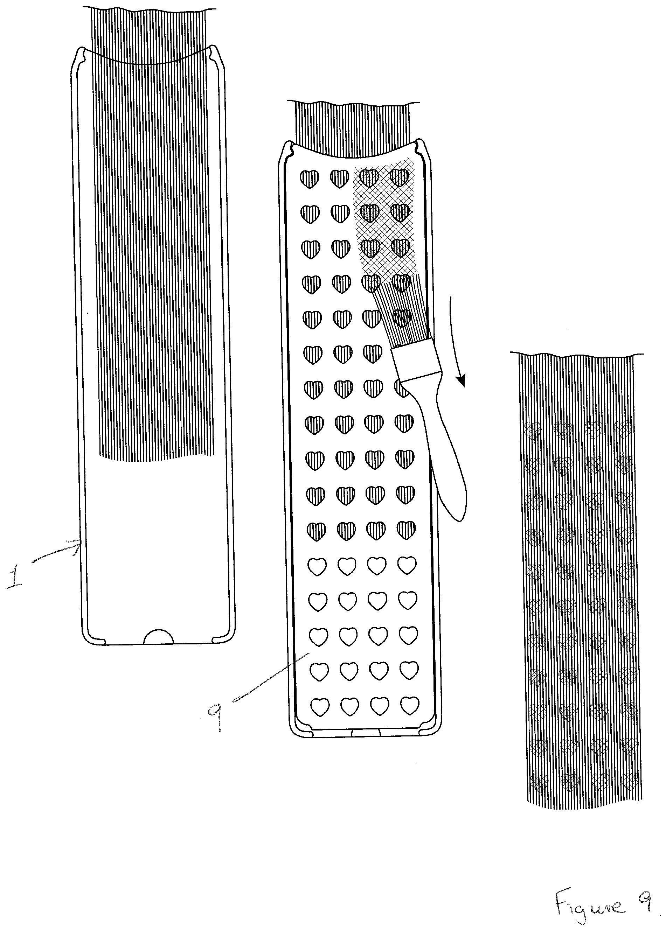

Use of the device is depicted in figure 9. To use the device of the invention, the hair colourist separates a swatch of hair from the remainder of the hair on the head and combs it through. The device of the invention is then placed beneath the swatch of hair with the curved edge abutting the head of the person having the hair patterned as shown in figure 9. The swatch of hair is adjusted to lie flat on the planar element of the device and the stencil is then placed on top of the hair as shown in figure 9. The stencil is accurately located on the hair by virtue of the rim and protrusions and is held firmly in place by the magnet. The hair colourist then paints hair dye or bleach over the stencil and where there is a cutaway portion of the stencil, the hair dye or bleach is applied directly to the hair. The stencil is then removed from the hair and the device is also removed. The hair dye or bleach is then left to develop in the usual manner and washed away to leave a coloured pattern on the hair as shown in figure 9.

The tool is economic to use because it is durable and may be made from plastics such as Polyethylene terephthalate or similar materials. This is unlike foils and meches which can only be used once and which must then be thrown away. In addition the device and the stencil may be made from recyclable materials.

It is extremely fast to colour a whole head of hair using this tool, as the stencil need only be placed on the hair for about 20 to 30 seconds while the dye is being applied. It can then be removed and the hair colourist moves on to the next sections of hair. This means that even a junior hairdresser can achieve complex colours quickly and accurately, which would be impossible to do using the colouring methods currently on the market. In addition multiple colours can easily be applied to the same section of hair at one time. It would thus be possible to have faded colours or layers of block colour all applied and developed at the same time. This again would be very difficult to achieve with currently commercially available colouring methods.

Using this tool the hairdresser can apply colour to any part of the hair easily and accurately i.e. roots, mid lengths or ends, which is difficult to do with existing colouring methods. In addition the planar element can also be used with a spatula and without the stencil for applying balayage colour.

The words "comprises/comprising" and the words "having/including" when used herein with reference to the present invention are used to specify the presence of stated features, integers, steps or components but does not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination, provided it falls within the scope of the claims.

## Claims

1. A kit of parts comprising at least one stencil (9) together with a device for producing patterned effects in the hair,
the device comprising a substantially planar element (1) having means to engage the at least one stencil (9),
the planar element being provided with at least one indentation (7) or at least one protrusion (13),
the stencil (9) being engageable with the planar element (1) of the device, the stencil (9) having at least one protrusion (13) provided on the edge of the stencil (9) or at least one indentation provided on the edge of the stencil (9),
either the protrusion (13) of the stencil being engageable with the indentation (7) of the planar element (1), or the indentation of the stencil (9) being engageable with the protrusion of the planar element (1),
**characterized in that**
the planar element (1) also comprises a magnetic means which is adapted to attract the stencil (9) and hold it firmly in contact with the planar element (1), and the stencil (9) is made of a material which is attracted by the magnetic means.

2. A kit as claimed in claim 1 wherein the underside of the device is provided with a handle (14) which projects out of the plane of the device and which can be used to grip the device.

3. A kit as claimed in claim 1 or claim 2 wherein the magnetic means is a magnet which is located on the underside of the planar element (1), or wherein the planar element is made of a magnetised material such that the planar element is the magnetic means.

4. A kit as claimed in any preceding claim wherein the planar element (1) is formed with a rim (6) along at least two of its sides, and the rim is provided along its length with a groove into which a stencil can be placed.

5. A kit as claimed in any preceding claim wherein the indentations (7) and/or protrusions (13) are provided in opposed pairs along the sides of the planar element and the stencil.

6. A kit as claimed in any preceding claim wherein the planar element is oblong in shape, and one of the short sides (3) of the oblong is curved.

7. A kit as claimed in claim 6 wherein the short side (3) of the planar element which is not curved is provided with an indentation (8) which is roughly in the shape of a finger or thumb.

8. A kit as claimed in any of claims 2 to 7 wherein the handle (14) is of an hour-glass shape.

9. A kit as claimed in any of claims 2 to 8 wherein the handle (14) is hinged so that it closes against the planar element (1) when the device is not in use.

10. A kit as claimed in any of claims 2 to 9 wherein a plurality of textured dots are provided on the handle (14) to improve grip.

11. A kit as claimed any preceding claim wherein the planar element (1) and/or the handle (14) are provided with thickened areas to provide rigidity of the device.

12. A kit 1 as claimed in any preceding claim wherein the end (12) of the stencil which would abut the head in use, is provided with a pair of projections (13a) which oppose each other across the width of the stencil, the projections being larger than the protrusions (13) on the stencil.

## Patentansprüche

1. Kit von Teilen, umfassend mindestens eine Schablone (9) zusammen mit einer Vorrichtung zur Erzeugung gemusterter Effekte im Haar,
wobei die Vorrichtung ein im Wesentlichen flaches Element (1) umfasst, das Mittel zum Eingreifen in die mindestens eine Schablone (9) aufweist,
wobei das flache Element mit mindestens einer Vertiefung (7) oder mindestens einem Vorsprung (13) versehen ist,
wobei die Schablone (9) mit dem flachen Element (1) der Vorrichtung in Eingriff bringbar ist, wobei die Schablone (9) mindestens einen am Rand der Schablone (9) vorgesehenen Vorsprung (13) oder mindestens eine am Rand der Schablone (9) vorgesehene Vertiefung aufweist,
wobei entweder der Vorsprung (13) der Schablone mit der Vertiefung (7) des flachen Elements (1) in Eingriff bringbar ist oder die Vertiefung der Schablone (9) mit dem Vorsprung des flachen Elements (1) in Eingriff bringbar ist,
**dadurch gekennzeichnet, dass**
das flache Element (1) ferner ein magnetisches Mittel umfasst, das angepasst ist, um die Schablone (9) anzuziehen und sie fest in Kontakt mit dem flachen Element (1) zu halten, und die Schablone (9) aus einem Material hergestellt ist, das von dem magnetischen Mittel angezogen wird.

2. Kit nach Anspruch 1, wobei die Unterseite der Vorrichtung mit einem Griff (14) versehen ist, der aus der Ebene der Vorrichtung herausragt und zum Greifen der Vorrichtung verwendet werden kann.

3. Kit nach Anspruch 1 oder 2, wobei das magnetische Mittel ein Magnet ist, der sich an der Unterseite des flachen Elements (1) befindet, oder wobei das flache Element aus einem magnetisierten Material hergestellt ist, sodass das flache Element das magnetische Mittel ist.

4. Kit nach einem der vorhergehenden Ansprüche, wobei das flache Element (1) entlang an mindestens zwei seiner Seiten mit einem Rand (6) ausgebildet ist und der Rand entlang seiner Länge mit einer Nut versehen ist, in die eine Schablone eingesetzt werden kann.

5. Kit nach einem der vorhergehenden Ansprüche, wobei die Vertiefungen (7) und/oder Vorsprünge (13) in gegenüberliegenden Paaren entlang der Seiten des flachen Elements und der Schablone vorgesehen sind.

6. Kit nach einem der vorhergehenden Ansprüche, wobei das flache Element eine längliche Form aufweist und eine der kurzen Seiten (3) des länglichen Elements gekrümmt ist.

7. Kit nach Anspruch 6, wobei die kurze Seite (3) des flachen Elements, die nicht gekrümmt ist, mit einer Vertiefung (8) versehen ist, die etwa die Form eines Fingers oder Daumens aufweist.

8. Kit nach einem der Ansprüche 2 bis 7, wobei der Griff (14) eine sanduhrähnliche Form aufweist.

9. Kit nach einem der Ansprüche 2 bis 8, wobei der Griff (14) so angelenkt ist, dass er sich gegen das flache Element (1) schließt, wenn die Vorrichtung nicht in Verwendung ist.

10. Kit nach einem der Ansprüche 2 bis 9, wobei eine Vielzahl von strukturierten Punkten an dem Griff (14) vorgesehen ist, um die Griffigkeit zu verbessern.

11. Kit nach einem der vorhergehenden Ansprüche, wobei das flache Element (1) und/oder der Griff (14) mit verdickten Bereichen versehen sind, um eine Steifigkeit der Vorrichtung bereitzustellen.

12. Kit 1 nach einem der vorhergehenden Ansprüche, wobei das Ende (12) der Schablone, das bei Verwendung an den Kopf anstoßen würde, mit einem Paar Fortsätzen (13a) versehen ist, die einander über die Breite der Schablone gegenüberliegen, wobei die Fortsätze größer als die Vorsprünge (13) auf der Schablone sind.

## Revendications

1. Un kit de pièces comprenant au moins un pochoir (9) ainsi qu'un dispositif pour produire des effets à motifs dans les cheveux,
le dispositif comprenant un élément (1) sensiblement plan disposant de moyens pour se mettre en prise avec l'au moins un pochoir (9),
l'élément plan étant pourvu d'au moins une échancrure (7) ou d'au moins une saillie (13),
le pochoir (9) pouvant être mis en prise avec l'élément (1) plan du dispositif, le pochoir (9) ayant au moins une saillie (13) prévue sur le bord du pochoir (9) ou au moins une échancrure prévue sur le bord du pochoir (9),
la saillie (13) du pochoir pouvant être mise en prise avec l'échancrure (7) de l'élément (1) plan ou l'échancrure du pochoir (9) pouvant être mise en prise avec la saillie de l'élément (1) plan,
**caractérisé en ce que**
l'élément (1) plan comprend également un moyen magnétique qui est adapté pour attirer le pochoir (9) et le maintenir fermement en contact avec l'élément (1) plan, et le pochoir (9) est fabriqué en un matériau qui est attiré par le moyen magnétique.

2. Kit selon la revendication 1, dans lequel la face inférieure du dispositif est pourvue d'une poignée (14) qui dépasse hors du plan du dispositif et qui peut être utilisée pour saisir le dispositif.

3. Kit selon la revendication 1 ou la revendication 2, dans lequel le moyen magnétique est un aimant qui est situé sur la face inférieure de l'élément (1) plan, ou dans lequel l'élément plan est fabriqué en un matériau magnétisé de telle sorte que l'élément plan est le moyen magnétique.

4. Kit selon l'une quelconque des revendications précédentes, dans lequel l'élément (1) plan est formé avec un rebord (6) le long d'au moins deux de ses côtés, et le rebord est pourvu, le long de sa longueur, d'une rainure dans laquelle un pochoir peut être placé.

5. Kit selon l'une quelconque des revendications précédentes, dans lequel les échancrures (7) et/ou les saillies (13) sont prévues sous forme de paires opposées le long des côtés de l'élément plan et du pochoir.

6. Kit selon l'une quelconque des revendications précédentes, dans lequel l'élément plan a une forme oblongue, et l'un des côtés courts (3) de la forme oblongue est incurvé.

7. Kit selon la revendication 6, dans lequel le côté court (3) de l'élément plan qui n'est pas incurvé est pourvu d'une échancrure (8) qui a grossièrement la forme d'un doigt ou d'un pouce.

8. Kit selon l'une quelconque des revendications 2 à 7, dans lequel la poignée (14) est en forme de sablier.

9. Kit selon l'une quelconque des revendications 2 à 8, dans lequel la poignée (14) est articulée de sorte qu'elle se ferme contre l'élément (1) plan lorsque le dispositif n'est pas utilisé.

10. Kit selon l'une quelconque des revendications 2 à 9, dans lequel une pluralité de points texturés sont prévus sur la poignée (14) pour améliorer la préhension.

11. Kit selon l'une quelconque des revendications précédentes, dans lequel l'élément (1) plan et/ou la poignée (14) sont pourvus de zones épaissies pour apporter une rigidité au dispositif.

12. Kit 1 selon l'une quelconque des revendications précédentes, dans lequel l'extrémité (12) du pochoir qui viendrait en butée contre la tête, en utilisation, est pourvue d'une paire d'éléments dépassants (13a) opposés l'un à l'autre à travers la largeur du pochoir, les éléments dépassants étant plus grands que les saillies (13) sur le pochoir.
